# EUROPEAN PATENT APPLICATION

(11) **EP 4 685 996 A1**
(43) Date of publication of application: **28.01.2026**
(21) Application number: 24873013.7
(22) Date of filing: 26.09.2024
(51) Int. Cl.: H01M 50/691, H01M 10/04, H01M 50/152

(54) **ELECTROLYTE REMOVING DEVICE**

(30) Priority: 27.09.2023 KR 20230130845
(71) Applicant: LG ENERGY SOLUTION, LTD., Seoul 07335 (KR)
(72) Inventor: KIM, Dae Cheon, Daejeon 34122 (KR); PARK, Dae Hyun, Daejeon 34122 (KR); KIM, Jong Seong, Daejeon 34122 (KR)
(74) Representative: Goddar, Heinz J.
(86) International application number: PCT/KR2024/014659
(87) International publication number: WO 2025/071305

(57) **Abstract**

An apparatus for removing an electrolyte according to the present invention includes an electrolyte removing unit configured to remove the electrolyte remaining on an opening and a beading part of a can, wherein the electrolyte removing unit includes an air injection passage through which air is injected toward the opening and the beading part of the can to introduce the electrolyte remaining on the opening and the beading part of the can into an electrode assembly accommodation part of the can, thereby removing the electrolyte.

## Description

### TECHNICAL FIELD

### CROSS-REFERENCE TO RELATED APPLICATION

The present application claims the benefit of the priority of Korean Patent Application Nos. 10-2023-0130845, filed on September 27, 2023, and 10-2024-0130643, filed on September 26, 2024, which are hereby incorporated by reference in their entirety.

### TECHNICAL FIELD

The present invention relates to an apparatus for removing an electrolyte, which is capable of introducing an electrolyte remaining on an opening and a beading part of a can and an electrolyte remaining on an upper portion of an insulator into the can after an electrolyte impregnation process to remove the electrolyte.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

The secondary batteries are classified into can-type secondary batteries in which an electrode assembly is built into a metal can, and pouch-type secondary batteries in which an electrode assembly is built into a pouch.

Such a can-type secondary battery includes an electrode assembly, an electrolyte, a can accommodating the electrode assembly and the electrolyte, and a cap assembly mounted in an opening of the can. In addition, such a pouch-type secondary battery includes an electrode assembly, an electrolyte, and a pouch that accommodates the electrode assembly and the electrolyte.

A method for manufacturing the can-type secondary battery includes a process of manufacturing a can provided with an opening, a beading part, and an accommodation part, a process of accommodating an electrode assembly in the accommodation part of the can and placing an insulator on an upper portion of the electrode assembly, a process of injecting an electrolyte into the accommodation part to impregnate the electrode assembly, and a process for placing a cap assembly in an opening of the can to clamp and fix the opening.

Here, the process of manufacturing the can includes a process of forming a plating layer on a surface of the can to prevent the can from rusting, and a process of cutting an end of the opening of the can to improve quality.

However, after the process of injecting the electrolyte, there was a problem that poor coupling between the can and the cap assembly occurs due to the electrolyte remaining in the opening and beading part of the can, and the electrolyte remains on the upper portion of the insulator and thus is not sufficiently impregnated into the electrode assembly. Particularly, since the plating layer is removed while cutting the end of the opening, there was a problem in that rust occurs at the end of the opening due to the remaining electrolyte.

### DISCLOSURE OF THE INVENTION

### TECHNICAL PROBLEM

An object of the present invention is to provide an apparatus for removing an electrolyte, in which an electrolyte remaining on an opening and a beading part of a can and an electrolyte remaining on an upper portion of an insulator are introduced into the can so as to be removed, thereby improving coupling between the can and a cap assembly and an impregnation property of the electrolyte, in particular, preventing rust from being generated on an end of the opening of the can.

### TECHNICAL SOLUTION

An apparatus for removing an electrolyte according to the present invention includes an electrolyte removing unit configured to remove the electrolyte remaining on an opening and a beading part of a can, wherein the electrolyte removing unit may include an air injection passage through which air is injected toward the opening and the beading part of the can to introduce the electrolyte remaining on the opening and the beading part of the can into an electrode assembly accommodation part of the can, thereby removing the electrolyte.

The electrolyte removing unit may further include an air collection passage through which the air discharged from the inside of the can is collected.

In the electrolyte removing unit, the air injection passage through which the air is injected toward the opening and the beading part of the can may be provided in an edge, and the air collection passage through which the discharged from the inside of the can air is collected may be provided at an inner side closer to a center than the edge.

The electrolyte removing unit may include: an outer tube disposed on the opening of the can; and an inner tube provided inside the outer tube and configured to partition an outer outlet of the outer tube and an outer collection part so that the air does not pass between the outer outlet and the outer collection part, wherein the air injection passage may be disposed between the outer outlet of the outer tube and an inner outlet of the inner tube to inject the air toward the opening and the beading part of the can, and the air collection passage may be provided to be connected from the inside of the inner tube to a collection port provided in the outer collection part of the outer tube and is configured to collect the air discharged from the inside of the can.

An outer diameter of the inner outlet may be less than an inner diameter of the opening.

The inner outlet may further protrude toward the can than the outer outlet.

An inner diameter of the outer tube may be greater than an outer diameter of the opening of the can.

The inner tube may include: an inner outlet provided to be spaced a predetermined distance from the outer outlet of the outer tube; an inner coupling part coupled to the outer tube and configured to partition the outer outlet and the outer collection part so that the air does not pass between the outer outlet and the outer collection part; and an inner connection part configured to connect the inner coupling part to the inner outlet and having a diameter less than that of the inner outlet, wherein an air supply member configured to supply the air may be coupled to the outside of the outer tube on which the inner connection part is disposed.

The apparatus may further include a sealing member configured to seal a gap between the electrolyte removing unit and the opening of the can.

The sealing member may include: a fixed part fixed to the electrolyte removing unit; and a support supported in the form that surrounds an outer circumferential surface of the opening of the can.

A fixing groove into which the fixed part is inserted to be fixed may be defined outside the outer outlet.

The inner outlet may further protrude toward the can than the outer outlet, and the sealing member may further include a protrusion inserted into a space defined by a difference in length between the inner outlet and the outer outlet and supported on a surface of the opening of the can.

The protrusion may be provided on a portion of an inner surface of the support corresponding to the space defined by the difference in length between the inner outlet and the outer outlet.

The apparatus may further include a jig unit configured to fix the can so as not to move.

The apparatus may further include an elevation unit configured to allow the electrolyte removing unit to descend toward the opening of the can or to return to its original position.

The inner coupling part may be coupled to the outer tube through a coupling bolt.

### ADVANTAGEOUS EFFECTS

The apparatus for removing the electrolyte of the present invention may include an electrolyte removing unit. Due to this feature, the electrolyte remaining on the opening and the beading part of the can may be introduced into the can so as to be removed, thereby improving the coupling between the can and the cap assembly and the impregnation property of the electrolyte, in particular, preventing rust from being generated on the end of the opening of the can.

In addition, the electrolyte removing unit of the apparatus for removing the electrolyte of the present invention may have the air injection passage in the edge thereof and the air collection passage at the center thereof. Due to these features, the electrolyte remaining on the opening and the beading part of the can may be quickly removed, and the air discharged from the inside of the can may be quickly collected.

In addition, the electrolyte removing unit of the apparatus for removing the electrolyte of the present invention may have the double structure including the outer tube and the inner tube, and thus, the air injection passage may be provided between the outer outlet of the outer tube and the inner outlet of the inner tube, and the air collection passage may be connected from the inside of the inner tube to the collection port provided in the outer collection part of the outer tube. Due to these features, the air injection passage and air collection passage may be stably implemented, and as a result, the size of the electrolyte removing unit may be minimized to improve the manufacturing efficiency.

In the electrolyte removing unit of the apparatus for removing the electrolyte of the present invention, the outer diameter of the inner outlet of the inner tube may be less than the inner diameter of the opening of the can. Due to this feature, the air may be stably injected to the opening and the beading part of the can, and the interference between the inner tube and the can may be prevented from occurring.

In the electrolyte removing unit of the apparatus for removing the electrolyte of the present invention, the inner outlet of the inner tube may further protrude toward the can than the outer outlet of the outer tube. Due to these features, the air may be induced to be stably injected up to the beading part of the can, and thus, the electrolyte remaining on the beading part may be completely removed.

In the electrolyte removing unit of the apparatus for removing the electrolyte of the present invention, the inner tube may include the inner outlet, the inner coupling part, and the inner connection part having the diameter less than that of the inner outlet, and the air supply member may be coupled to the outside of the outer tube on which the inner connection part is disposed. Due to these features, the air supplied from the air supply member may be stably supplied to the air injection passage provided between the inner outlet of the inner tube and the outer outlet of the outer tube.

The apparatus for removing the electrolyte of the present invention may further include the sealing member that seals the gap between the electrolyte removing unit and the opening of the can. Due to this feature, the gap between the can and the electrolyte removing unit may be sealed to prevent the electrolyte remaining in the can from being scattered in all the directions by the air injected from the electrolyte removing unit, and in particular, the electrolyte remaining on the can and the electrolyte remaining on the upper portion of the insulator disposed on the electrode assembly accommodation part of the can may also be induced to be introduced into the electrode assembly accommodation part so as to be removed. This may improve the electrolyte impregnation capacity.

In the apparatus for removing the electrolyte of the present invention, the sealing member may include the protrusion inserted into the space defined due to the difference in length between the inner outlet of the inner tube and the outer outlet of the outer tube and supported on the top surface of the opening of the can. Due to this feature, the collision and the noise between the can and the electrolyte removing unit may be prevented from occurring.

### BRIEF DESCRIPTION OF THE DRAWINGS

FIG. 1 is a cross-sectional view of a secondary battery according to a first embodiment of the present invention.
FIG. 2 is a cross-sectional view of a can in which an electrode assembly is accommodated after an electrode impregnation process.
FIG. 3 is a process diagram of an apparatus for removing an electrolyte according to a first embodiment of the present invention.
FIG. 4 is a perspective view illustrating an electrolyte removing unit of the apparatus for removing the electrolyte according to the first embodiment of the present invention.
FIG. 5 is a cross-sectional view of FIG. 4.
FIG. 6 is an enlarged view of a portion A illustrated in FIG. 5.
FIG. 7 is a perspective view illustrating a sealing member of the apparatus for removing the electrolyte according to the first embodiment of the present invention.
FIG. 8 is a cross-sectional view illustrating a usage state of the apparatus for removing the electrolyte according to the first embodiment of the present invention.
FIG. 9 is an enlarged view of a portion B illustrated in FIG. 8.
FIG. 10 is a cross-sectional view of an electrolyte removing unit according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

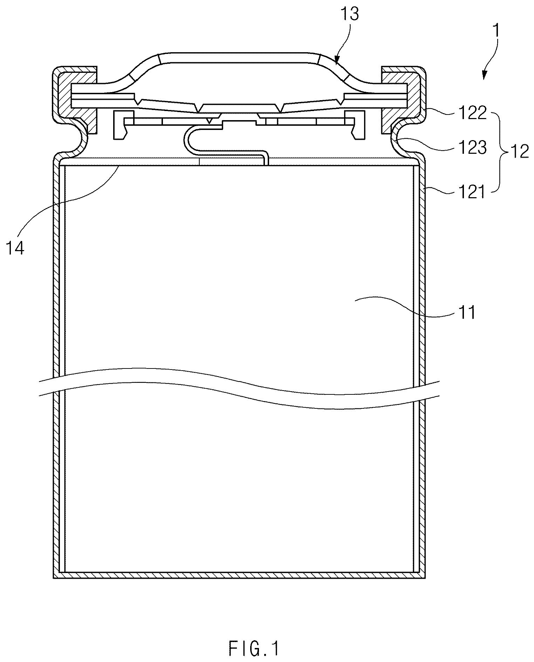

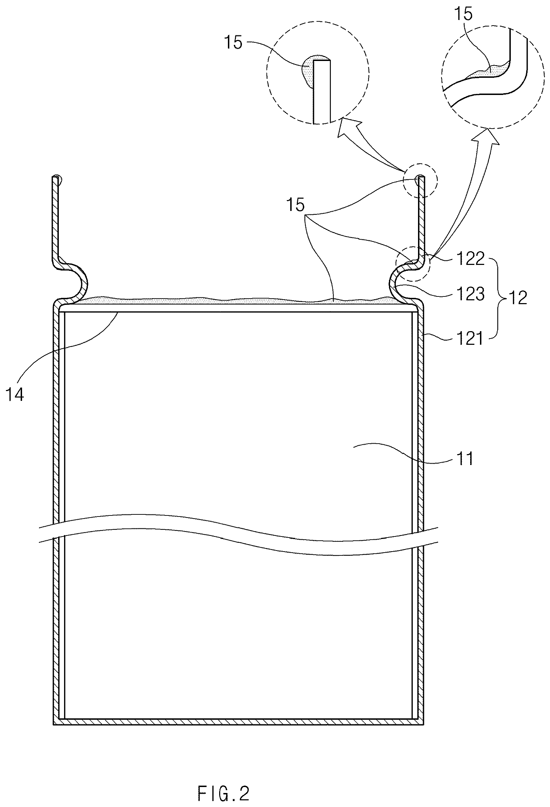

FIG. 1 is a cross-sectional view of a secondary battery according to a first embodiment of the present invention, and FIG. 2 is a cross-sectional view of a can in which an electrode assembly is accommodated after an electrode impregnation process.

A secondary battery 1 according to a first embodiment of the present invention, as illustrated in FIG. 1, includes an electrode assembly 11, a can 12 that accommodates the electrode assembly 11, a cap assembly 13 mounted in an opening 122 of the can 12, and an insulator 14 that insulates the cap assembly 13 and the electrode assembly 11 from each other.

The electrode assembly 11 may have a structure in which a plurality of electrodes and a plurality of separators are alternately disposed, and the plurality of electrodes may be positive and negative electrodes.

The can 12 has a structure that is opened in one direction (upward when viewed in FIG. 1) and includes an opening 122 that is an entrance, an electrode assembly accommodation part 121 in which the electrode assembly 11 is accommodated, and a beading part 123 provided between the electrode assembly accommodation part 121 and the opening 122 to support the cap assembly 13. That is, referring to FIG. 1, a structure in which the opening 122, the beading part 123, and the electrode assembly accommodation part are sequentially disposed in a vertical direction is provided.

A method for manufacturing the secondary battery having the above structure includes a process of manufacturing a can 12 provided with an opening 122, a beading part 123, and an electrode assembly accommodation part 121, a process of accommodating an electrode assembly 11 and an insulator 14 in the electrode assembly accommodation part of the can 12, a process of injecting an electrolyte 15 into the can 12 to impregnate the electrode assembly 11, and a process of inserting a cap assembly 13 into the opening 122 of the can 12 to clamp and fix the cap assembly 13.

As illustrated in FIG. 2, after the process of impregnating the electrolyte 15, the electrolyte 15 may remain on the opening 122 and beading part 123 of the can 12 and a top surface of the insulator 14, and the residual electrolyte 15 may cause problems such as poor coupling between the can 12 and the cap assembly 13 and rust occurring on the opening 122 of the can 12. Particularly, impregnation failure may occur as an amount of electrolyte 15 impregnated into the electrode assembly 11 decreases.

To solve this problem, the present invention further includes a process of removing the electrolyte 15 remaining on the can 12 and the insulator 14 by introducing the electrolyte 15 into the electrode assembly accommodation part 121 of the can 12. Here, the apparatus 2 for removing the electrolyte according to the first embodiment of the present invention is used.

That is, the apparatus 2 for removing the electrolyte according to the first embodiment of the present invention may introduce the electrolyte 15 remaining on the opening 122 and the beading part 123 of the can 12 into the can to remove the electrolyte, in particular, introduces the electrolyte 15 remaining on the top surface of the insulator 14 into the electrode assembly accommodation part 121 to prevent the impregnation failure of the electrolyte 15 from occurring.

Hereinafter, the apparatus 2 for removing the electrolyte according to the first embodiment of the present invention will be described in detail with reference to the attached drawings.

### [Apparatus for removing electrolyte according to first embodiment of the present invention]

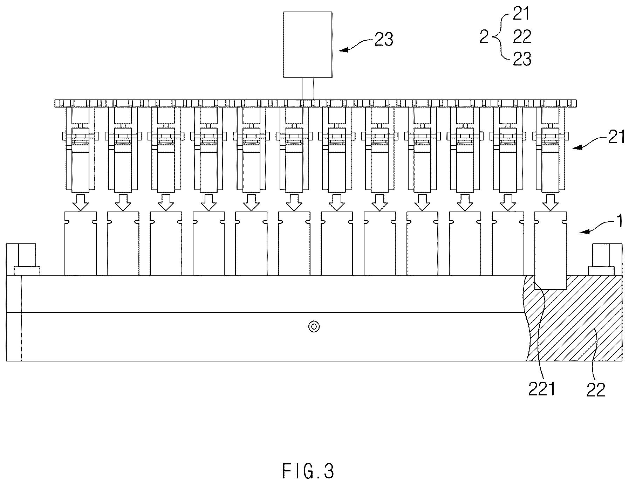

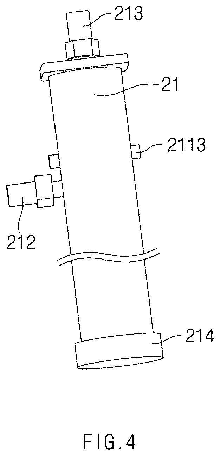

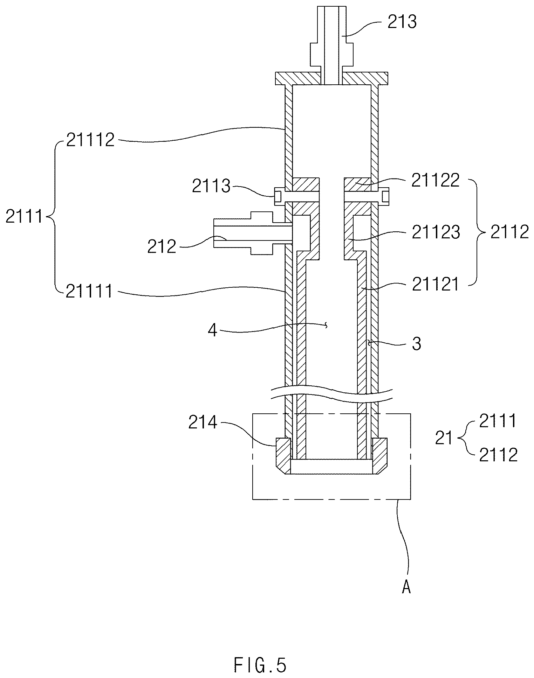

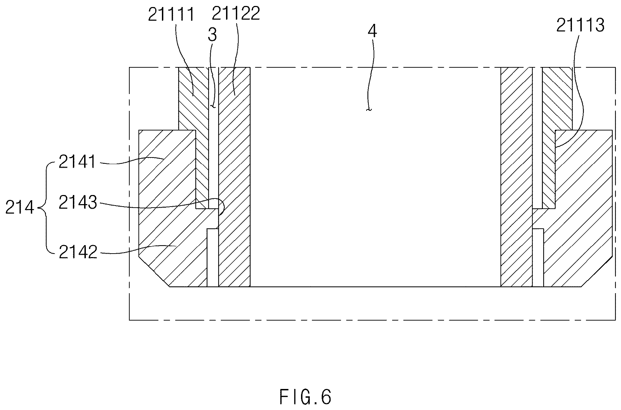

FIG. 3 is a process diagram of the apparatus for removing the electrolyte according to the first embodiment of the present invention, FIG. 4 is a perspective view illustrating an electrolyte removing unit of the apparatus for removing the electrolyte according to the first embodiment of the present invention, FIG. 5 is a cross-sectional view of FIG. 4, and FIG. 6 is an enlarged view of a portion A illustrated in FIG. 5.

As illustrated in FIGS. 3 and 4, the apparatus 2 for removing the electrolyte according to the first embodiment of the present invention includes an electrolyte removing unit 21 that introduces the electrolyte 15 remaining on the opening 122 and the beading part 123 of the can 12 into the can 12 to remove the electrolyte 15.

### Electrolyte removing unit

The electrolyte removing unit 21 has a structure, in which the electrolyte 15 remaining on the opening 122 and the beading part 123 of the can and the insulator 14 is introduced into the can by using air so as to be removed.

That is, the electrolyte removing unit 21 has an air injection passage 3 that injects air toward the opening 122 and the beading part 123 of the can 12 to introduce the electrolyte 15 remaining on the opening 122 and the beading part 123 of the can 12 into the can, thereby removing the electrolyte 15, and an air collection passage 4 that collects the air discharged from the inside of the can 12.

That is, the electrolyte removing unit 21 injects the air into the can 12 through the air injection passage 3 to introduce the electrolyte 15 remaining on the opening 122 and the beading part 123 of the can 12 into the can, thereby removing the electrolyte 15. In addition, the air injected into the can 12 is discharged to the outside. Here, the air discharged to the outside of the can 12 is collected through the air collection passage 4. Thus, the electrolyte 15 remaining on the opening and the beading part of the can 12 and the insulator may be stably removed.

In more detail, the electrolyte removing unit 21 has an air injection passage 3 provided in an edge to inject the air toward the opening 122 and the beading part 123 of the can 12, and an air collection passage 4 provided at an inner side (preferably a center) closer to the center than the edge to collect the air discharged from the inside of the can 12. That is, the air injection passage is provided in the edge of the electrolyte removing unit, and the air collection passage is provided at the center. Thus, the air may be injected into the air injection passage 3 provided in the edge to introduce the electrolyte remaining on the opening 122 and the beading part 123 of the can 12 and the insulator into the can, thereby removing the electrolyte, and the air discharged from the can 12 to the air collection passage 4 provided at the center may be collected.

For example, the electrolyte removing unit 21 includes: an outer tube 2111 disposed in the opening 122 of the can 12; and an inner tube 2112 provided inside the outer tube 2111 to partition an outer outlet 21111 and an outer collection part 21112 of the outer tube 2111 so that the air does not pass therebetween. That is, the outer tube 2111 and inner tube 2112 have a double-tube structure.

The outer tube 2111 has a structure that is opened only in a direction toward the can 12, and includes an outer outlet 21111 to which an air supply member 212 is coupled, and an outer collection part 21112 to which an air collection member 213 is coupled. That is, the outer outlet and the outer collection part have a structure that is connected in a longitudinal direction of the outer tube.

The inner tube 2112 includes an inner outlet 21121 provided at a predetermined interval with respect to the outer outlet 21111 of the outer tube 2111, an inner coupling part 21122 coupled to the outer tube 2111 to partition the outer outlet 21111 and the outer collection part 21112 so that the air does not pass therebetween, and an inner connection part 21123 connecting the inner coupling part 21122 to the inner outlet 21121 and having a diameter less than that of the inner outlet 21121.

That is, an outer circumferential surface of the inner connection part 21123 has a diameter less than that of an outer circumferential surface of the inner outlet 21121.

Here, the outer tube 2111 and the inner coupling part 21122 of the inner tube 2112 may be coupled to each other using a coupling bolt 2113, and thus, the outer tube 2111 and the inner tube 2112 may be easily coupled to or separated from each other. That is, the coupling bolt 2113 passes through the outer tube 2111 and is coupled to the inner coupling part 21122 of the inner tube 2112.

In addition, the air supply member 212 may be coupled to the outside of the outer tube 2111 on which the inner connection part 21123 is disposed, and thus, an air accommodation space that is capable of sufficiently accommodates air of the air supply member 212 may be secured between the inner tube 2112 and the outer tube 2111.

Thus, the air injection passage 3 may be provided between the outer outlet 21111 of the outer tube 2111 and the inner outlet 21121 of the inner tube 2112 to inject the air supplied from the air supply member 212 toward the opening 122 and the beading part 123 of the can 12. Here, injection force of the air injection passage 3 may be adjusted by an amount of air supplied from the air supply member 212.

In addition, the air collection passage 4 may be provided to be connected from an inner center of the inner tube 2112 to the collection port provided in the outer collection part 21112 of the outer tube 2111. That is, the air collection passage 4 has a structure in which a passage provided at the center of the inner tube 2112 and a passage provided in the center of the air collection part of the outer tube 2111 are connected to each other. Thus, the air discharged from the inside of the can 12 may be collected.

The air collection member 213 that forcibly collects the air is provided on the air collection part of the can 12. That is, the air collection member 213 forcibly suctions and removes the air introduced into the air collection part using suction force.

An outer diameter of the inner outlet 21121 may be less than an inner diameter of the opening 122. Thus, as the air is introduced between the inner outlet 21121 and the opening 122, the air may be stably injected to the beading part 123 of the can 12, and as a result, the electrolyte 15 remaining on the beading part 123 may be effectively removed.

The inner outlet 21121 may be provided to protrude further toward the can 12 than the outer outlet 21111. That is, an end of the outer outlet 21111 may be disposed outside the can, and an end of the inner outlet 21121 may extend to be disposed inside the opening 122 of the can 12. Thus, in the process of removing the electrolyte 15 remaining on the can 12 through the electrolyte removing unit 21, a phenomenon in which the electrolyte removing unit is separated from the can 12 may be prevented. Particularly, the air may be injected toward a bent portion between the opening 122 and the beading part 123 of the can 12 to effectively remove the electrolyte 15 remaining on the bent portion between the opening 122 and the beading part 123 of the can 12.

An inner diameter of the outer tube 2111 may be greater than an outer diameter of the opening 122 of the can 12. Thus, even if the outer tube 2111 and the opening 122 of the can 12 are spaced a predetermined distance from each other on the same vertical line, the air may be stably injected to the entire opening 122 of the can 12, and as a result, the electrolyte 15 remaining on the opening 122 of the can 12 may be effectively removed.

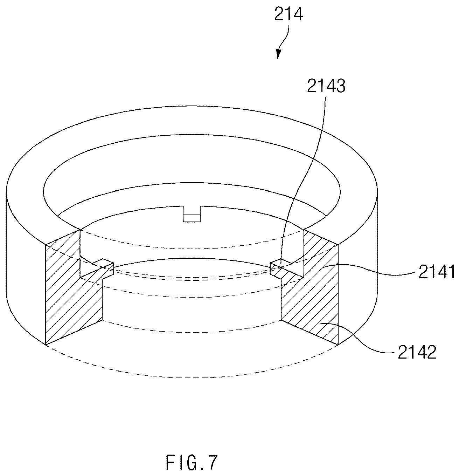

FIG. 7 is a perspective view illustrating a sealing member 214 of the apparatus 2 for removing the electrolyte according to the first embodiment of the present invention.

As illustrated in FIGS. 6 and 7, the sealing member 214 that seals a gap between the electrolyte removing unit 21 and the opening 122 of the can 12 may be further provided.

The sealing member 214 may prevent the electrolyte from being scattered to the outside through the gap between the electrolyte removing unit 21 and the can 12, and at the same time, may induce the electrolyte 15 remaining on the opening 122 and the beading part 123 of the can 12 to flow into the electrode assembly accommodation part 121.

That is, the sealing member 214 includes a fixed member 2141 fixed to the electrolyte removing unit 21, and a support 2142 supported in a form that surrounds the outer circumferential surface of the opening 122 of the can 12.

Here, the fixed part 2141 may be fixed to the outer outlet 21111 of the electrolyte removing unit 21 using an adhesive or a fixing means. Particularly, the fixed part 2141 may be detachably fixed to the electrolyte removing unit 21.

The support 2142 is supported on the opening 122 of the can 12 to prevent the electrolyte 15 and the air from leaking between the sealing member 214 and the opening 122.

The sealing member 214 is made of a material having buffer power. For example, the sealing member 214 may be made of polypropylene.

A fixing groove 21113 into which the fixed part 2141 is fitted to be coupled may be defined in the outer circumferential surface of the outer outlet 21111 of the electrolyte removing unit 21. Thus, fixing force of the sealing member 214 may increase.

The sealing member 214 may further include a protrusion 2143 that is inserted into a space defined by a difference in length between the inner outlet 21121 and the outer outlet 21111 and supported on the top surface of the opening 122 of the can 12. That is, the protrusion 2143 may be supported on the top surface of the opening 122 of the can 12 to prevent the electrolyte removing unit 21 from colliding with the opening 122.

The protrusion 2143 may be provided on a portion of an inner surface of the support 2142 corresponding to the space defined by the difference in length between the inner outlet 21121 and the outer outlet 21111. Thus, the air injected from the air injection passage 3 may be injected into the opening 122 without an interference from the protrusion 2143.

The apparatus 2 for removing the electrolyte according to the first embodiment of the present invention further includes a jig unit 22 that fixes the can 12 so as not to move, as illustrated in FIG. 3.

### Jig unit

The jig unit 22 may have one or more insertion grooves 221 defined in a top surface into which the can 12 is inserted, and when a lower end of the can 12 is inserted into the insertion groove 221, the can 12 may be prevented from moving forward, backward, left, or right. Here, the insertion groove 221 may further include a pressing means (not shown) for pressing the lower end of the can 12.

The apparatus 2 for removing the electrolyte according to the first embodiment of the present invention may further include an elevation unit that allows the electrolyte removing unit 21 to descend toward the opening 122 of the can 12 or turn to its original position, as illustrated in FIG. 3.

### Elevation unit

When it is necessary to remove the electrolyte 15 remaining on the can 12, the elevation unit 23 may the electrolyte removing unit 21 to descend close to the opening 122 of the can 12, and when the process of removing the electrolyte 15 is completed, the elevation unit 23 may allow the electrolyte removing unit 21 to ascend away from the opening 122 of the can 12.

The elevation unit 23 may be provided as a hydraulic cylinder.

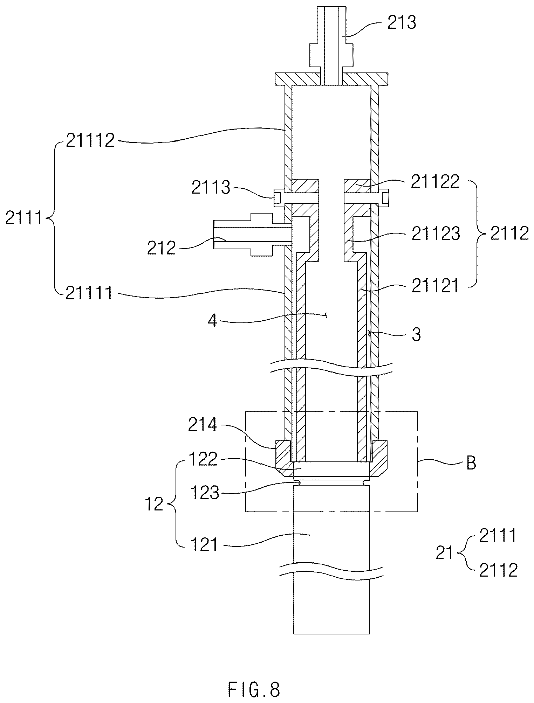

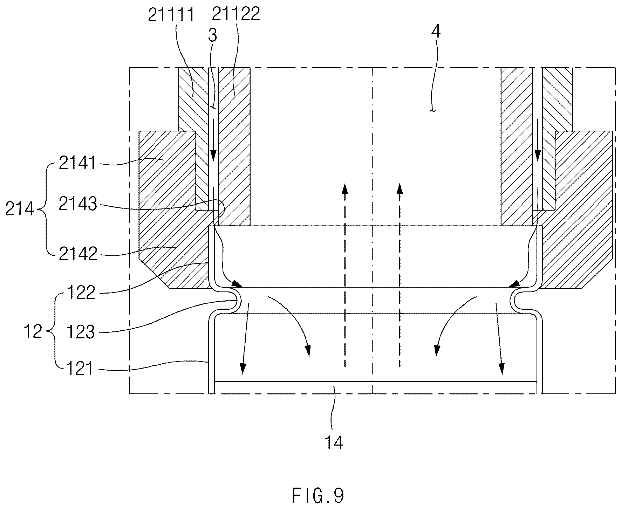

FIG. 8 is a cross-sectional view illustrating a usage state of the apparatus for removing the electrolyte according to the first embodiment of the present invention, and FIG. 9 is an enlarged view of a portion B illustrated in FIG. 8.

The usage state of the apparatus 2 for removing the electrolyte 2 according to the first embodiment of the present invention having such a structure is described.

First, the can 12 from which the electrolyte remaining thereon is required to be removed is inserted into the insertion groove 221 of the jig unit 22. Next, the electrolyte removing unit 21 is disposed close to the opening 122 of the can 12 using the elevation unit 23. Then, the support 2142 provided on the sealing member 214 of the electrolyte removing unit 21 is supported on the opening 122 of the can 12 to seal the gap between the electrolyte removing unit 21 and the can 12.

Next, the air is supplied through the air supply member 212. Then, the air of the air supply member 212 is injected to the opening 122 and the beading part 123 of the can 12 through the air injection passage 3 (between the inner outlet 21121 of the inner tube 2112 and the outer outlet 21111 of the outer tube 2111), and as a result, the electrolyte 15 remaining on the opening 122 and the beading part 123 of the can 12 and the insulator is scattered in all directions. Here, since the gap between the electrolyte removing unit 21 and the can 12 is sealed by the sealing member 214, the remaining electrolyte 15 may flow into the electrode assembly accommodation part 121 of the can 12, and as a result, the electrolyte 15 remaining on the opening 122 and the beading part 123 of the can 12 may be removed. Particularly, the electrolyte 15 remaining on the upper surface of the insulator moves by the air injected from the air injection passage 3 to flows into the electrode assembly accommodation part 121 of the can 12. As a result, the electrolyte 15 remaining on the upper surface of the insulator may be removed.

The air injected into the can 12 is discharged outside the can 12 and collected through the air collection passage 4 (the passage connecting the center of the inner tube 2112 to the outer collection part 21112 of the outer tube 2111) and then be discharged to the outside through the air collection member 213.

Thus, the apparatus 2 for removing the electrolyte according to the first embodiment of the present invention may effectively remove the electrolyte 15 remaining on the opening 122, the beading part 123 of the can 12 and the insulator, in particular, may induce the electrolyte to flow into the electrode assembly accommodation part 121 of the can 12, thereby preventing poor electrolyte impregnation from occurring.

Hereinafter, in descriptions of another embodiment of the present invention, constituents having the same function as the above-mentioned embodiment have been given the same reference numeral in the drawings, and thus duplicated description will be omitted.

### [Apparatus for removing electrolyte according to second embodiment of the present invention]

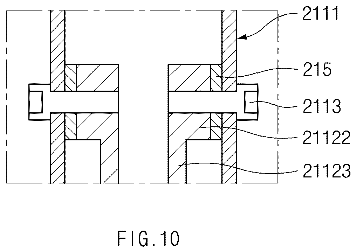

FIG. 10 is a cross-sectional view of an electrolyte removing unit according to a second embodiment of the present invention.

An apparatus 2 for removing an electrolyte according to a second embodiment of the present invention includes an electrolyte removing unit 21, as illustrated in FIG. 10, and the electrolyte removing unit 21 includes an outer tube 2111 and an inner tube 2112.

Here, a sealing pad 215 is provided between an inner coupling part 21122 of the inner tube 2112 and the outer tube 2111 to increase in sealing force.

That is, the sealing pad 215 prevents air from leaking between the inner coupling part 21122 of the inner tube 2112 and the outer tube 2111.

The sealing pad 215 may be made of the same material as the sealing member 214.

Thus, the apparatus 2 for removing the electrolyte according to the second embodiment of the present invention may include the sealing pad 215 to improve sealing force between the inner coupling part 21122 of the inner tube 2112 and the outer tube 2111.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Secondary battery
11: Electrode assembly
12: Can
121: Electrode assembly accommodation part
122: Opening
123: Beading part
13: Cap assembly
14: Insulator
15: Residual electrolyte
2: Apparatus for removing electrolyte
21: Electrode removing unit
2111: Outer tube
21111: Outer outlet
21112: Outer collection part
21113: Fixing groove
2112: Inner tube
21121: Inner outlet
21122: Inner coupling part
21123: Inner connection part
212: Air supply member
213: Air collection member
2113: Coupling bolt
214: Sealing member
2141: Fixed part
2142: Support
2143: Protrusion
215: Sealing pad
22: Jig unit
221: Insertion groove
23: Elevation unit
3: Air injection passage
4: Air collection passage

## Claims

1. An apparatus for removing an electrolyte, comprising:
an electrolyte removing unit configured to remove the electrolyte remaining on an opening and a beading part of a can,
wherein the electrolyte removing unit comprises an air injection passage through which air is injected toward the opening and the beading part of the can to introduce the electrolyte remaining on the opening and the beading part of the can into an electrode assembly accommodation part of the can, thereby removing the electrolyte.

2. The apparatus of claim 1, wherein the electrolyte removing unit further comprises an air collection passage through which the air discharged from the inside of the can is collected.

3. The apparatus of claim 2, wherein, in the electrolyte removing unit, the air injection passage through which the air is injected toward the opening and the beading part of the can is provided in an edge, and the air collection passage through which the discharged from the inside of the can air is collected is provided at an inner side closer to a center than the edge.

4. The apparatus of claim 3, wherein the electrolyte removing unit comprises:
an outer tube disposed on the opening of the can; and
an inner tube provided inside the outer tube and configured to partition an outer outlet of the outer tube and an outer collection part so that the air does not pass between the outer outlet and the outer collection part,
wherein the air injection passage is disposed between the outer outlet of the outer tube and an inner outlet of the inner tube to inject the air toward the opening and the beading part of the can, and
the air collection passage is provided to be connected from the inside of the inner tube to a collection port provided in the outer collection part of the outer tube and is configured to collect the air discharged from the inside of the can.

5. The apparatus of claim 4, wherein an outer diameter of the inner outlet is less than an inner diameter of the opening.

6. The apparatus of claim 4, wherein the inner outlet further protrudes toward the can than the outer outlet.

7. The apparatus of claim 4, wherein an inner diameter of the outer tube is greater than an outer diameter of the opening of the can.

8. The apparatus of claim 4, wherein the inner tube comprises:
an inner outlet provided to be spaced a predetermined distance from the outer outlet of the outer tube;
an inner coupling part coupled to the outer tube and configured to partition the outer outlet and the outer collection part so that the air does not pass between the outer outlet and the outer collection part; and
an inner connection part configured to connect the inner coupling part to the inner outlet and having a diameter less than that of the inner outlet,
wherein an air supply member configured to supply the air is coupled to the outside of the outer tube on which the inner connection part is disposed.

9. The apparatus of claim 4, further comprising a sealing member configured to seal a gap between the electrolyte removing unit and the opening of the can.

10. The apparatus of claim 9, wherein the sealing member comprises:
a fixed part fixed to the electrolyte removing unit; and
a support supported in the form that surrounds an outer circumferential surface of the opening of the can.

11. The apparatus of claim 10, wherein a fixing groove into which the fixed part is inserted to be fixed is defined outside the outer outlet.

12. The apparatus of claim 10, wherein the inner outlet further protrudes toward the can than the outer outlet, and
the sealing member further comprises a protrusion inserted into a space defined by a difference in length between the inner outlet and the outer outlet and supported on a surface of the opening of the can.

13. The apparatus of claim 12, wherein the protrusion is provided on a portion of an inner surface of the support corresponding to the space defined by the difference in length between the inner outlet and the outer outlet.

14. The apparatus of claim 1, further comprising a jig unit configured to fix the can so as not to move.

15. The apparatus of claim 1, further comprising an elevation unit configured to allow the electrolyte removing unit to descend toward the opening of the can or to return to its original position.

16. The apparatus of claim 8, wherein the inner coupling part is coupled to the outer tube through a coupling bolt.
